# EUROPÄISCHE PATENTANMELDUNG

(11) **EP 0 999 092 A2**
(43) Veröffentlichungstag der Anmeldung: **10.05.2000**
(21) Anmeldenummer: 99119889.6
(22) Anmeldetag: 07.10.1999
(51) Int. Cl.: B60N 2/36

(54) **Verriegelungsanordnung für einen Fahrzeugsitz**

(30) Priorität: 04.11.1998 DE 19850751
(71) Anmelder: ISE Innomotive Systems Europe GmbH, 51702 Bergneustadt (DE)
(72) Erfinder: Janisch, Mirko, 53721 Siegburg (DE)
(74) Vertreter: Fuchs Mehler Weiss & Fritzsche

(57) **Zusammenfassung**

Bei bestimmten Fahrzeugtypen, beispielsweise bei solchen mit Hecktüren, ist es zweckmäßig, die Anlenkung der Rückenlehnen (2) so auszubilden, daß diese aus einer verriegelten Normal-Sitzposition nach vorne auf das Sitzteil (1) klappbar und in dieser Position auch verriegelbar sind. Zur Vermeidung getrennter Verriegelungsbeschläge sieht die Erfindung vor, daß die Verriegelungsanordnung aus mindestens einem Klinkenbeschlag (5) besteht, der eine Grundplatte (6) aufweist, die am Lehnenträger (2) befestigbar ist und an der zwei Klinken (10, 11; 18) schwenkbar angelenkt sind, die in einen verriegelnden, durch manuelles Verschwenken lösbaren Wirkeingriff mit zwei an der Rückenlehne (3) angebrachten Arretierungsbolzen (15, 16) bringbar sind, derart, daß in der Normal-Sitzposition der eine Arretierungsbolzen (16) von der einen Klinke (11, 18) und in der geklappten Position der zweite Arretierungsbolzen (15) von der zweiten Klinke (10; 18) verriegelbar ist.

## Beschreibung

Die Erfindung bezieht sich auf eine Verriegelungsanordnung für einen Fahrzeugsitz, der ein Sitzteil und zu dessen beiden Seiten je einen Lehnenträger mit einer daran angelenkten Rückenlehne aufweist, die aus einer beidseitig verriegelbaren Normal-Sitzposition in eine auf das Sitzteil geklappte und beidseitig verriegelbare Position überführbar ist.

Bei bestimmten Kraftfahrzeugtypen, insbesondere Kombifährzeugen, Vans, Fahrzeugen mit Hecktüren und Kleinbussen ist es zweckmäßig und zum Teil auch notwendig, die Rücksitze so auszubilden, daß die Rückenlehnen nach vorne auf das Sitzteil klappbar sind, um so einen größeren Laderaum zu gewinnen bzw. das Einsteigen der Fahrzeuginsassen auf die Rücksitze zu erleichtern bzw. zu ermöglichen. Derartige Fahrzeugsitze mit klappbaren Rückenlehnen sind beispielsweise in der DE 30 45 309A1, DE 32 19 311, C2, DE 32 22 274C2 und der EP 0 076 933 B1 beschrieben.

Bei einer derartigen Ausführung der Fahrzeugsitze mit einer klappbaren Rückenlehne ist es notwendig, diese Rückenlehne sowohl in der Normal-Sitzposition als auch in der auf das Sitzteil geklappten Position mechanisch stabil zu verriegeln, um unerwünschtes selbsttätiges Verstellen der Rückenlehnen, insbesondere während des Fahrbetriebes, zu verhindern.

Gemäß dem Stand der Technik sind hierzu typischerweise zwei separate Arretiermechanismen vorgesehen, von denen der eine der Verriegelung der Rückenlehne in der Normal-Sitzposition und der andere der Verriegelung in der geklappten Position dient. Diese bekannte Verriegelungsanordnung mit zwei separaten Verriegelungsmechanismen hat den Nachteil, daß zwei verschiedene Verriegelungsbeschläge getrennt auf Vorrat gehalten werden müssen, was die Logistik und die Herstellungskosten belastet. Außerdem ist mit Nachteil die Montage bei der Fahrzeugherstellung durch die Notwendigkeit des Montierens von zwei Verriegelungsbeschlägen relativ aufwendig.

Durch die US 53 93 116 ist eine Verriegelungsanordnung für einen Fahrzeugsitz, der ein Sitzteil und zu dessen beiden Seiten je einen Lehnenträger mit einer daran aus einer beidseitig verriegelbaren Normal-Sitzposition auf das Sitzteil klappbar und beidseitig verriegelbar angelenkten Rückenlehne aufweist, bekannt geworden, die einen Kombi-Klinkenbeschlag zur Verriegelung in beiden Positionen der Rückenlehne aufweist, wobei zwei Klinken schwenkbar angelenkt sind.

Ferner ist durch die EP 0 381 559 A 1 eine Verriegelungsanordnung der vorgenannten Art bekannt geworden, bei der mit einer Klinke durch Eingriff in zwei mit der Rückenlehne verschwenkbare Rastausnehmungen sowohl die aufrechte als auch die abgeklappte Position der Rückenlehne verriegelbar ist.

Der Erfindung liegt die Aufgabe zugrunde, die eingangs bezeichnete Verriegelungsanordnung so auszubilden, daß durch eine einfachere Konstruktion dieser Anordnung eine Senkung ihrer Herstellungs- und Montagekosten möglich ist, in Verbindung mit einer Verbesserung der Logistik dieses Teiles.

Die Lösung dieser Aufgabe gelingt gemäß der Erfindung dadurch, daß die Verriegelungsanordnung auf jeder Seite des Sitzes einen Kombi-Klinkenbeschlag zur Verriegelung in beiden Positionen der Rückenlehne aufweist, der jeweils eine Grundplatte besitzt, die am Lehnenträger befestigbar ist und an der zwei Klinken schwenkbar angelenkt sind, die in einen verriegelnden, durch manuelles Verschwenken lösbaren Wirkeingriff mit zwei an der Rückenlehne angebrachten Arretierungsbolzen bringbar sind, derart, daß in der Normal-Sitzposition der eine Arretierungsbolzen von der einen Klinke und in der geklappten Position der zweite Arretierungsbolzen von der zweiten Klinke verriegelbar ist.

Durch die erfindungsgemäßen Maßnahmen benötigt man nur noch einen Verriegelungsbeschlag für beide zu verriegelnde Positionen der Rückenlehnen, der zudem eine einfache Konstruktion besitzt. Dadurch können die Herstellungskosten für die notwendige Verriegelungsanordnung der Rückenlehne gesenkt werden, was gerade bei Zulieferteilen in der Automobilbranche von großer Bedeutung ist, und zum anderen werden bei der Montage des Fahrzeuges die Logistik und die Anbringung der Verriegelungsanordnung vereinfacht, und damit die Kosten gesenkt, da nur noch ein Verriegelungsbeschlag auf Vorrat zu halten und zu montieren ist.

Für die konstruktive Ausgestaltung des Klinkenbeschlages kommen eine Reihe von Möglichkeiten in Frage.

Gemäß einer ersten Ausgestaltung der Erfindung kann die Verriegelungsanordnung so getroffen werden, daß die zwei Klinken mit je einem Hebelarm auf einer gemeinsamen Achse an der Grundplatte separat angelenkt sind.

Alternativ kann die Anordnung so getroffen werden, daß die zwei Klinken einstückig zu einer mittig an der Grundplatte angelenkten Doppelklinke mit einem gemeinsamen Hebelarm verbunden sind. In diesem Fall enthält der Klinkenbeschlag weniger Einzelteile, was sich günstig auf die Herstellungskosten auswirkt.

Gemäß einer Weiterbildung der Erfindung ist eine spielfreie Verklinkung möglich, wenn eine Blattfeder zur Vorspannung der Klinken an der Grundplatte angebracht ist.

Eine besonders vorteilhafte Verschwenkbarkeit der Klinken ist erzielbar, wenn gemäß einer anderen Weiterbildung der Erfindung die Klinken auf einem Lagerbolzen schwenkbar gehalten sind, der an der Grundplatte befestigt ist.

Eine besonders kompakte Bauform des Klinkenbeschlages läßt sich erzielen, wenn die Klinken S-förmig geschwungen ausgebildet sind, und in Fall von zwei getrennten Klinken gemäß der ersten Ausgestaltung die beiden separaten Klinken X-förmig mit voneinander abgewandt angeformten Klinknasen und gegenläufig verschwenkbar angelenkt sind, sowie im Fall der Doppelklinke um 180° zueinander versetzte Klinkennasen angeformt sind.

Eine einfache Konstruktion hinsichtlich der Entriegelbarkeit ist gemäß einer weiteren Ausgestaltung der Erfindung möglich, wenn der Hebelarm der Klinken jeweils eine Ausnehmung aufweist, in die ein Seilzug zur Entklinkung der Arretierungsbolzen einhängbar ist, der mit einem Entriegelungsglied an dem Fahrzeugsitz verbindbar ist.

Weitere ausgestaltende Merkmale und Vorteile der Erfindung ergeben sich anhand der Beschreibung von zwei in den Zeichnungen dargestellten Ausführungsbeispielen.

Es zeigen:
- Fig. 1: in einer schematischen Seitenansicht einen Fahrzeugsitz mit einer ersten Ausführungsform der erfindungsgemäßen Verriegelungsanordnung in Form eines Klinkenbeschlages mit zwei separaten Klinken,
- Fig. 2: in einer vergrößerten Draufsicht-Darstellung den Klinenbeschlag nach Fig. 1,
- Fig. 3: einer einer schematischen Seitenansicht einen Fahrzeugsitz entsprechend Fig. 1 mit einer zweiten Ausführungsform der erfindungsgemäßen Verriegelungsanordnung in Form eines Klinkenbeschlages mit einer Doppelklinke, und
- Fig. 4: in einer vergrößerten Draufsicht-Darstellung den Klinkenbeschlag nach Fig. 3

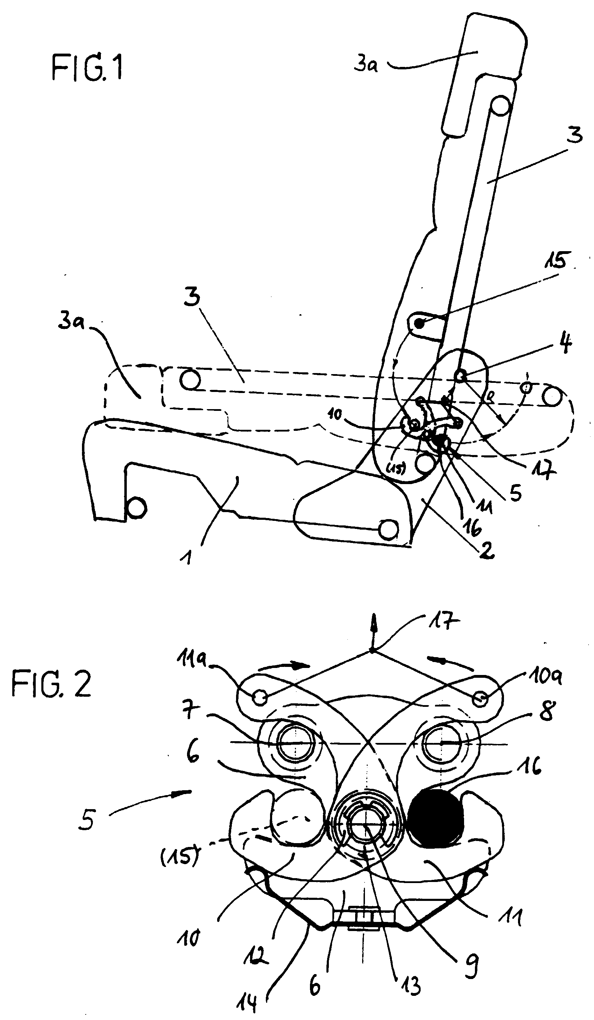

Die Fig. 1 zeigt in einer schematischen Darstellung einen Sitz für ein Kraftfahrzeug, das aus einem Sitzteil 1, an dem zu beiden Seiten je ein Lehnenträger 2 angebracht ist, und einer Rückenlehne 3 mit einer Kopfstütze 3 a besteht, die an den Lehnenträgern derart um eine Achse 4 schwenkbar angelenkt ist, daß sie aus der Normal-Sitzposition (auszogene Linien) nach vorne auf das Sitzteil 1 klappbar ist, um insbesondere den hinteren Laderaum des Fahrzeuges zu vergrößern.

Die konstruktive Ausbildung der Anlenkung der Lehne 3 zwecks Verschwenkung um die Achse 4 ist an sich bekannt und braucht daher nicht näher dargestellt zu werden. Der Fahrzeugsitz weist ferner an beiden Sitzseiten jeweils am Lehnenträger eine zentrale Verriegelungsanordnung auf, die generell mit 5 bezeichnet und in der Fig. 2 vergrößert dargestellt ist. Mittels dieser Verriegelungsanordnung 5 kann die Rückenlehne 3 sowohl in der normalen Sitzposition als auch in der abgeklappten Position mechanisch stabil verriegelt werden.

Diese Kombi-Verriegelungsanordnung 5 besteht jeweils aus einem Klinkenbeschlag, der eine Grundplatte 6 aufweist, die über Befestigungsbolzen 7, 8 und einen Lagerbolzen 9 an dem zugehörigen Lehmenträger 2 befestigt ist.

Mittels des Lagerbolzens 9 sind auf der Grundplatte 6 zwei S-förmig geschwungene Klinken 10, 11 schwenkbar angebracht, die durch eine Sicherungsscheibe 12 auf dem Lagerbolzen 9 gesichert werden. Unterlegscheiben 13 unterstützen in üblicher Weise die verschwenkbare Lagerung der Klinken 10, 11 auf dem Lagerbolzen 9. Mittels einer Blattfeder 14, die an die Grundplatte 6 vorzugsweise angenietet ist, erfahren die Klinken eine gewisse Vorspannung.

An der Rückenlehne 3 sind beidseitig zwei Arretierungsbolzen 15, 16 so angebracht, daß die normale Sitzposition und die geklappte Position des Fahrzeugsitzes dadurch definiert sind. Diese Arretierungsbolzen sind von dem Mittelpunkt der Drehachse 4 der Rückenlehne 3 gleichweit entfernt, wie in der Fig. 1 durch den Kreis mit dem Radius R angedeutet ist.

Der Arretierungsbolzen 16 legt dabei die normale Sitzposition fest, die in den Figuren 1 und 2 dargestellt ist. Dieser Arretierungsbolzen 16 steht dabei im verriegelnden Wirkeingriff mit der Klinke 11, d.h. ist in der Klinkennase eingerastet. In der geklappten Position würde der Arretierungsbolzen 15, der in den Figuren 1 und 2 auch in Bezug auf den Klinkenbeschlag angedeutet ist (mit dem Bezugszeichen 15 in Klammern), mit der Klinke 10 in Wirkeingriff gelangen. Je nach Sitzposition befindet sich daher immer nur eine der Klinken 10, 11 im Wirkeingriff mit einem der Arretierungsbolzen 15, 16.

An den der Klinkennasen gegenüberliegenden Enden der Klinken 10, 11 ist jeweils eine Öffnung 10 a und 11 a ausgebildet, in der jeweils das gesplittete Ende eines gemeinsamen Seilzuges 17 (Bowdenzug) eingehängt ist, der zu einer nicht dargestellten Entriegelungstaste an der Rückenlehne 3 führt. Beim Betätigen des Seilzuges 17 werden beide Klinken 10, 11 in Pfeilrichtung verschwenkt, wobei der jeweils eingeklinkte, d.h. verriegelte Arretierungsbolzen 16 oder 15 freigegeben wird. Die Rückenlehne kann dann verschwenkt und in der anderen Position verriegelt werden, indem der zugehörige Arretierungsbolzen 15 oder 16 in die Klinkennase der zugehörigen, federvorgespannten Klinke einklinkt. Auf diese Weise kann man abwechselnd die gewünschte Position einstellen.

Vorzugsweise ist dabei der Arretierungsbolzen 15 so an der Rückenlehne 3 angeordnet, daß er erst dann in die Nase der Klinke 10 einklinkt, wenn die Rückenlehne 3 mit ihrer Kopfstütze 3 a etwas in die Polsterung des Sitzteiles 1 hineingedrückt wird, so daß durch die Kissenvorspannung eine lagestabile, spiel- und damit klapperfreie Verriegelung gegeben ist.

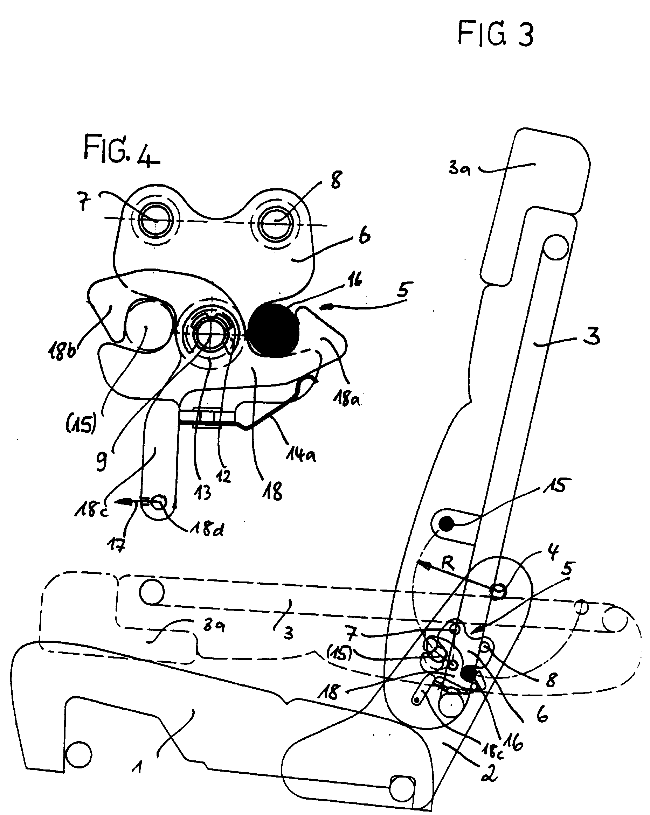

In den Figuren 3 und 4 ist eine zweite Ausführungsform der Erfindung dargestellt. Der Aufbau des in Fig. 3 dargestellten Fahrzeugsitzes entspricht, wie auch durch die Gleichheit der Bezugszeichen zum Ausdruck gebracht ist, vollinhaltlich demjenigen des in Fig. 1 dargestellten Sitzes, jedoch hat die Verriegelungsanordnung, die ebenfalls mit dem Bezugszeichen 5 generell versehen ist, einen anderen Aufbau. Anstelle von zwei separaten Klinken besitzt der an den Lehnenträger 2 mit einer Grundplatte 6 befestigte Klinkenbeschlag nach den Figuren 3 und 4 eine einstückige Doppelklinke 18 mit zwei Klinkennasen 18 a und 18 b, die mittig mittels des Lagerbolzens 9 auf der Grundplatte 6 schwenkbar angelenkt ist und die mittels einer Halb-Blattfeder 14 a eine Vorspannung erhält. Diese Doppelklinke 18 weist einen gemeinsamen Hebelarm 18 c auf, der eine Ausnehmung 18 d aufweist, in die ein Seilzug 17 einhängbar ist. Wird dieser Seilzug in Pfeilrichtung betätigt, so wird die Doppelklinke 18 verschwenkt und gibt im dargestellten Zustand (Normal-Sitzposition) den Arretierungsbolzen 16 frei bzw. würde im abgeklappten Zustand den Arretierungsbolzen 15 freigeben.

Auch bei der Ausführungsform nach den Figuren 3 und 4 werden somit bei einer Betätigung der Doppelklinke 18 beide Bolzenpositionen 15, 16 freigegeben, wie auch im übrigen die Wirkungsweise gleich derjenigen ist, wie sie anhand der Ausführungsform nach den Figuren 1 und 2 beschrieben worden ist.

Die Klinken 10, 11 und 18 sind vorzugsweise ausgestanzte Stahlblechteile, wodurch eine preiswerte Herstellung des Klinkenbeschlages möglich ist.

In den Figuren 1 bis 4 ist jeweils nur die eine Sitzseite dargestellt und beschrieben. Es versteht sich, daß die Verriegelung auf der anderen Seite in gleicher Weise ausgebildet ist, wobei die Seilzüge 17 beider Kombi-Klinkenbeschläge zweckmäßig zu einer einzigen Betätigungstaste am Sitz geführt sind.

## Patentansprüche

1. Verriegelungsanordnung für einen Fahrzeugsitz, der ein Sitzteil (1) und zu dessen beiden Seiten je einen Lehnenträger (2) mit einer daran angelenkten Rückenlehne (3) aufweist, die aus einer beidseitig verriegelbaren Normal-Sitzposition in eine auf das Sitzteil geklappte und beidseitig verriegelbare Position überführbar ist, **dadurch gekennzeichnet,** daß die Verriegelungsanordnung auf jeder Seite des Sitzes einen Kombi-Klinkenbeschlag (5) zur Verriegelung in beiden Positionen der Rückenlehne (3) aufweist, der jeweils eine Grundplatte (6) besitzt, die am zugehörigen Lehnenträger (2) befestigbar ist und an der zwei Klinken (10, 11; 18) schwenkbar angelenkt sind, die in einen verriegelnden, durch manuelles Verschwenken lösbaren Wirkeingriff mit zwei an der Rückenlehne (3) angebrachten Arretierungsbolzen (15, 16) bringbar sind, derart, daß in der Normal-Sitzposition der eine Arretierungsbolzen (16) von der einen Klinke (11, 18) und in der geklappten Position der zweite Arretierungsbolzen (15) von der zweiten Klinke (10; 18) verriegelbar ist.

2. Verriegelungsanordnung nach Anspruch 1, **dadurch gekennzeichnet,** daß die zwei Klinken (10, 11) mit je einem Hebelarm auf einer gemeinsamen Achse an der Grundplatte (6) separat angelenkt sind.

3. Verriegelungsanordnung nach Anspruch 2, **dadurch gekennzeichnet,** daß die beiden separaten Klinken (10, 11) X-förmig mit voneinander abgewandt angeformten Klinknasen und gegenläufig verschwenkbar angelenkt sind.

4. Verriegelungsanordnung nach Anspruch 1, **dadurch gekennzeichnet,** daß die zwei Klinken einstückig zu einer mittig an der Grundplatte (6) angelenkten Doppelklinke (18) mit einem gemeinsamen Hebelarm (18 c) verbunden sind.

5. Verriegelungsanordnung nach Anspruch 4, **dadurch gekennzeichnet,** daß an den beiden Enden der Doppelklinke (18) um 180° zueinander versetzte Klinknasen (18 a, 18 b) angeformt sind.

6. Verriegelungsanordnung nach einem der Ansprüche 2 bis 5, **dadurch gekennzeichnet,** daß der Hebelarm der Klinken (10, 11; 18) jeweils eine Ausnehmung (10 a, 11 a; 18 d) aufweist, in die ein Seilzug (17) zur Entklinkung der Arretierungsbolzen (15, 16) einhängbar ist, der mit einem Entriegelungsglied an dem Fahrzeugsitz verbindbar ist.

7. Verriegelungsanordnung nach einem der Ansprüche 1 bis 6, **dadurch gekennzeichnet,** daß die Klinken (10, 11; 18) S-förmig geschwungen ausgebildet sind.

8. Verriegelungsanordnung nach einem der Ansprüche 1 bis 7, **dadurch gekennzeichnet,** daß die Klinken (10, 11; 18) auf einem Lagerbolzen (9) schwenkbar gehalten sind, der an der Grundplatte (6) befestigt ist.

9. Verriegelungsanordnung nach Anspruch 8, **dadurch gekennzeichnet,** daß die Grundplatte (6) randseitig mittels zweier Befestigungsbolzen (7, 8) und zentral mittels einem die Grundplatte (6) durchdringenden Zapfen des Lagerbolzens (9) an dem zugehörigen Lehnenträger (2) befestigt ist.

10. Verriegelungsanordnung nach einem der Ansprüche 1 bis 9, **dadurch gekennzeichnet,** daß eine Blattfeder (14; 14 a) zur Vorspannung der Klinken (10, 11; 18) an der Grundplatte (6) angebracht ist.
